# EUROPÄISCHE PATENTANMELDUNG

(11) **EP 1 413 185 A1**
(43) Veröffentlichungstag der Anmeldung: **28.04.2004**
(21) Anmeldenummer: 03024465.1
(22) Anmeldetag: 23.10.2003
(51) Int. Cl.: A01B 1/02, B25G 1/04

(54) **Spaten und dergleichen Bodenbearbeitungsgerät**

(30) Priorität: 25.10.2002 DE 20216497 U
(71) Anmelder: Idealspaten- Bredt GmbH & Co. KG, 58313 Herdecke (DE)
(72) Erfinder: Tomashoff, Carl-August, 58313 Herdecke (DE)
(74) Vertreter: GROSSE BOCKHORNI SCHUMACHER

(57) **Zusammenfassung**

Bei einem Spaten und dergleichen Bodenbearbeitungsgerät, mit einem als Griff dienendem langgestrecktem Stiel (2), insbesondere Holzstiel und einem am Stielende befestigten Arbeitsblatt (1), insbesondere Spatenblatt, ist im Stiel eine Längenverstelleinrichtung (7) für die Stiellänge des Spatens integriert.

## Beschreibung

Die Erfindung betrifft einen Spaten und dergleichen Bodenbearbeitungsgerät gemäß dem Oberbegriff des Patentanspruchs 1.

Beim Spaten handelt es sich um ein sehr häufig verwendetes Gartengerät, mit dem Erde umgegraben wird. Üblicherweise ist der Spaten aus einem Spatenblatt mit einer daran angesetzten Schaft gebildet, in welche ein Holzstiel eingepasst ist, der an seinem freien Ende einen Griffknauf, Griffbügel oder dergleichen aufweist. Als Werkstoff wird für den Stiel zumeist Holz verwendet und zwar aufgrund der besonderen Fähigkeit des Holzes, die Absorption von Feuchtigkeit in den Handflächen während des Arbeitens aufzunehmen. Nach der DIN 20127 sind die Längen der Holzstiele für einen Spaten in ihrer Dimension festgelegt, wobei eine Toleranz von insgesamt 50 mm für die Stiellänge ab der Trittkante, d. h. Arbeitshöhe des Werkzeuges, geregelt ist. Diese Festlegung war über viele Jahre praxisbezogen und hat sich auch mit Hinsicht auf den üblichen Transport mit DIN-Paletten mit einer Basislänge von 1200 mm bewährt.

Allerdings hängt die für die Bodenbearbeitung geeignete Länge des Stiels aufgrund der beim Bearbeiten des Bodens, insbesondere Umgraben, auftretenden Hebelwirkung von der Größe der den Spaten benutzenden Person ab. Diesen Kriterien können die herkömmlichen Spaten allerdings nicht gerecht werden. Hierbei ist zu bedenken, dass Frauen in der Regel kleiner gewachsen sind als Männer und die Variationsbreite in der Körpergröße von Menschen sich zwischenzeitlich im Bereich von etwa 165 cm bis 190 cm bewegt. Bei dieser Sachlage ist eine optimale ergonomische Anpassung der herkömmlichen Spaten an die Größe einer Person nicht gegeben und hängt deshalb die Nutzung der vollen Tauglichkeit eines Spatens vom Zufall ab, ob bei einer vorgegebenen Länge der Spaten von einer Person mit der im wesentlichen richtigen Körpergröße benutzt wird.

Aufgabe der Erfindung ist es, hier Abhilfe zu schaffen und einen Spaten und dergleichen Bodenbearbeitungsgerät derart weiterzubilden, dass eine schnelle und situative Anpassung an die Körpergröße des Benutzers des Bearbeitungsgeräts möglich ist. Nach einem weiteren Aspekt soll dabei der Vorteil des Holzwerkstoffs für den Stiel beibehalten bleiben.

Diese Aufgabe wird erfmdungsgemäß durch die im kennzeichnenden Teil des Anspruchs 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung wird in den Stiel eine Längenverstelleinrichtung integriert, die aus Metall gebildet sein kann, wohingegen die übrigen Stielabschnitte vornehmlich aus Holz gebildet sind. Insbesondere ist der untere Stielabschnitt durch einen Holzstemps gebildet, der in der üblichen Weise mit der Schaft eines Spatens befestigt ist, wobei der hintere Stielabschnitt entweder wiederum durch einen Holzstemps gebildet sein kann oder durch ein Griffrohr aus Metall mit einem Handgriff etwa in Form eines U-förmigen Bügels, an welchem ein Griffsteg bzw. Griffbügel angeordnet ist. Dieser kann vorteilhafterweise wieder aus Holz gebildet sein, um die Vorteile des Holzwerkstoffs auch für den längenverstellbaren Stiel nach der Erfindung zu realisieren. Derartige Teleskopeinrichtungen erlauben eine einfache Längenverstellung des Stiels. Gleichwohl kann durch Integration der Teleskopeinrichtung die Stabilität des Holzstiels beibehalten werden, so dass der mit der Teleskopeinrichtung ausgerüstete Spaten lange Zeit auch bei hoher Beanspruchung benutzt werden kann.

In vorteilhafter Weise ist die Teleskopeinrichtung mindestens aus zwei ineinander gesteckten Teleskoprohren gebildet, wobei die beiden Rohre zudem mit einer Überwurfhülse, die als Drehhülse ausgebildet sein kann, verbunden sind. Durch entsprechendes Drehen des Drehgriffes lässt sich die Verbindung lockern, so dass die beiden Teleskoprohre zueinander zwecks Einstellung der Länge des Stieles verstellt werden können. Die gewünschte Stelllage kann dann arretiert werden. Hierbei ist eine stufenlose Verstellung möglich, jedoch ist es zweckmäßig, wenn eine rastermäßige Verstellung gewährleistet wird, indem etwa an einem der Teleskoprohre ein Vorsprung und am anderen Teleskoprohr beabstandete Ausnehmungen vorgesehen sind, so dass eine gewünschte Rastereinstellung der Länge möglich ist. Die Arretierung erfolgt dann wiederum durch entsprechendes Drehen des Drehgriffes.

Nachfolgend wird ein bevorzugtes Ausführungsbeispiel der Erfindung anhand der Zeichnung beschrieben. Darin zeigen
- Figur 1: eine Seitenansicht eines Spatens mit maximal eingestellter Stiellänge,
- Figur 2: eine Draufsicht auf den in Figur 1 dargestellten Spaten sowie
- Figur 3: eine Draufsicht auf den Spaten, hier jedoch mit minimal eingestellter Stiellänge.

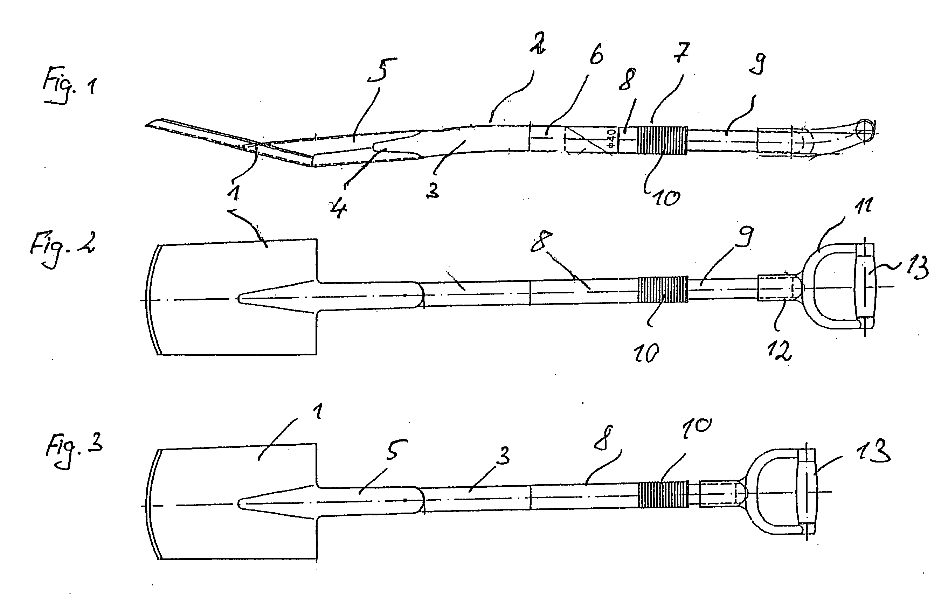

Auch der erfindungsgemäße Spaten ist in üblicherweise aus einem Spatenblatt 1 und einem damit verbundenen Stiel 2 gebildet, der in üblicherweise bei Spaten aus Holz gebildet ist, da sich Holz in besonderer Weise durch die Fähigkeit der Absorption von Feuchtigkeit in den Handflächen während des Arbeitens auszeichnet. Auch im dargestellten Ausführungsbeispiel wird für den Stiel 2 insoweit Holz verwendet, da der mit 3 bezeichnete Stielabschnitt, der mit dem Spatenblatt 1 verbunden ist, aus einem Holzstemps gebildet ist. Dieser ist an seinem vorderen Ende in der üblichen Weise mit dem Spatenblatt 1 verbunden, indem das vordere Ende des Holzstemps bei 4 in die mit 5 bezeichnete Schaft des Spatenblatts eingedrückt wird. Die Verbindung erfolgt je nach Modell über ein oder zwei Nieten, wobei jedoch auch andere geeignete Befestigungen möglich sind. An seinem anderen Ende ist der Holzstemps 3 mit einem angearbeiteten Zapfen 6 versehen, der beispielsweise durch Abdrehen oder Abfräsen des Holzstemps 3 erzeugt wird. Dieser Zapfen 6 dient zur Aufnahme einer allgemein mit 7 bezeichneten Teleskopeinrichtung, mit der die Länge des Spatenstiels 2 variabel eingestellt werden kann. Diese Teleskopeinrichtung 7 weist zwei Stielrohre 8 und 9 auf, die miteinander durch eine aufgesetzte Verstellhülse 10 verbunden sind. Diese Verstellhülse 10 ist als Drehgriff ausgebildet und kann, wie aus den Figuren 1 bis 3 hervorgeht, zum Zwecke des besseren Handlings profiliert sein. Im dargestellten Ausführungsbeispiel weist die Verstellhülse 10 an ihrem Außenmantel eng beabstandete umlaufende Rippen mit kreissegmentartiger Wölbung an der Außenseite auf. Auf der dem Spatenblatt 1 abgewandten Seite ist die Teleskopeinrichtung 7 mit einem Spatengriff 11 versehen, wobei der Spatengriff 11 mit einem Anschlussrohr 12 auf das Rohr 9 aufgesteckt und damit befestigt ist.

Dies kann durch Schrauben, Nieten, Nägel oder Formschluss erfolgen. Dieser Griff kann aus Holz oder aus Metall hergestellt sein, jedenfalls ist es zweckmäßig, wenn der mit 13 bezeichnete Griffbügel zumindest aus Holz gebildet ist. Es ist jedoch auch eine andere geeignete Materialwahl möglich.

Die Teleskopeinrichtung 7 dient zur Verstellung der Stiellänge, wobei eine rasterweise Verstellung vorgesehen ist. Mit Hilfe des Drehgriffs 10 werden die jeweiligen eingestellten Längenstufen arretiert. In einer besonderen Ausgestaltung kann die Teleskopeinrichtung 7 so ausgebildet sein, dass durch Drehen des Drehgriffs 10 entgegen Uhrzeigerrichtung die Arretierung gelöst wird und die beiden Rohre 8 und 9 der Teleskopeinrichtung relativ zueinander verstellt werden können. Durch eine entsprechende Rastnase und beabstandeter Ausnehmungen in Längsrichtung kann die gewünschte Längeneinstellung rasterweise herbeigeführt werden, wobei in der gewünschten Einstelllänge die Fixierung durch Einrasten eines Vorsprungs in einer Ausnehmung erfolgt. Die Arretierung erfolgt dann durch Drehen des Drehgriffs in Uhrzeigerrichtung, wodurch die beiden Teleskoprohre mit dem Drehgriff verspannt werden. Hierzu kann beispielsweise eines der Rohre mit Schlitzen versehen sein, so dass beim Drehen des Drehgriffs entgegen Uhrzeigerrichtung das eine Teleskoprohr sich selbsttätig aufweitet und damit eine Verstellung der beiden Rohre relativ zueinander möglich ist. Die Arretierung erfolgt dann durch Drehen des Drehgriffs in der anderen Richtung, wodurch die Verspannung der beiden Rohre erfolgt. Gegebenenfalls kann auch eine weitere Zwischenhülse vorgesehen sein.

Die Verbindung und das Teleskop, insbesondere die Überlappung der Teile bzw. Rohrelemente bzw. deren stärkemäßige und materialmäßie Auslegung ist derart, dass die notwendigen physikalischen Belastungen an einem Spaten, hier insbesondere Stoßkräfte und Biegekräfte, einwandfrei aufgenommen werden können. Wesentlich ist bei den dargestellten erfindungsgemäßen Ausführungsformen, dass der Holzstiel 2 aus grifffreundlichem Holz gebildet ist bis auf die integrierte Teleskopeinrichtung, die zweckmäßigerweise aus Metall gebildet ist. Der am Ende der Teleskopeinrichtung aufgesetzte Griffteil kann gleichfalls insgesamt aus Holz gebildet sein, insbesondere wenn ein Holzstemps verwendet wird. Er kann beispielsweise auch durch ein rohrartiges Metall- und Bügelteil 11,12 mit einem darin aufgenommenen Holzgriff 13 gebildet sein, der bei Bedarf auch aus einem anderen Material gewählt sein kann. Holz eignet sich jedoch, wie oben bereits ausgeführt, wegen seiner hervorragenden Absorptionsfähigkeit von Feuchtigkeit.

## Patentansprüche

1. Spaten und dergleichen Bodenbearbeitungsgerät, mit einem als Griff dienendem langgestrecktem Stiel, insbesondere Holzstiel und einem am Stielende befestigten Arbeitsblatt, insbesondere Spatenblatt, **dadurch gekennzeichnet, dass** im Stiel (2) eine Längenverstelleinrichtung (7) für die Stiellänge des Spatens integriert ist.

2. Spaten nach Anspruch 1, **dadurch gekennzeichnet, dass** die Längenverstelleinrichtung als Teleskopeinrichtung gebildet ist.

3. Spaten nach Anspruch 1 oder 2, **dadurch gekennzeichnet, dass** die Teleskopeinrichtung mit einem Ende auf einem das Spatenblatt (1) aufnehmenden Holzstemps (3) aufgenommen ist und dass auf dem anderen Ende ein Griffstiel oder ein Griff (11-13), insbesondere aus Holz, angeordnet ist.

4. Spaten nach einem der vorhergehenden Ansprüche, **dadurch gekennzeichnet, dass** die Teleskopeinrichtung aus mindestens zwei über eine Verstellhülse (10) miteinander verbundenen Rohren (6, 9) gebildet ist.

5. Spaten nach Anspruch 4, **dadurch gekennzeichnet, dass** die Teleskopeinrichtung (7) bezüglich ihrer beiden Teleskoprohre (8, 9) in Rastern in Längsrichtung verstellbar ist, wobei die eingestellten Längenstufen vorzugsweise über die als Drehgriff ausgebildete Verstellhülse (10) arretierbar sind.

6. Spaten nach einem der vorhergehenden Ansprüche, **dadurch gekennzeichnet, dass** der stielartige Holzstemps (3) für die Aufnahme der Teleskopeinrichtung mit einem Zapfen (6) versehen ist, auf dem das Rohrende der Teleskopeinrichtung (7) aufgesetzt und zwar vorzugsweise form- und/oder kraft- bzw. festschlüssig verbunden ist.

7. Spaten nach einem der vorhergehenden Ansprüche, **dadurch gekennzeichnet, dass** die Teleskopeinrichtung (7) mit ihrem griffseitigen Rohrende mit dem Griffstiel oder Griff verbunden ist und zwar vorzugsweise durch eine Rohr/Zapfen-Verbindung.
